# EUROPEAN PATENT APPLICATION

(11) **EP 4 410 536 A2**
(43) Date of publication of application: **07.08.2024**
(21) Application number: 24175790.5
(22) Date of filing: 14.04.2022
(51) Int. Cl.: B32B 7/027

(54) **FILM**

(30) Priority: 14.04.2021 GB 202105310; 11.08.2021 GB 202111513
(62) Divisional of application: 22723371.5
(71) Applicant: Innovia Films Limited, Wigton, Cumbria CA7 9BG (GB)
(72) Inventor: SINGH, Shalendra, Wigton, CA7 9BG (GB); LEWUCHA, Cezary, Wigton, CA7 9BG (GB)
(74) Representative: Brand Murray Fuller LLP

(57) **Abstract**

A naked collation film comprises a core layer (C), an inner sealing layer (I) of polyolefinic material and an outer sealing layer (O) of polyolefin material, each sealing layer comprising at least two, and preferably three, polyolefins selected from C4, and at least one of C2 and C3 polyolefins. At least one of the inner layer and the outer layer has at least one of:
i. a C4 content of greater than about 10mol%;
ii. a C4/C2 molar ratio of at least about 1.2; and/or
iii. a C4/C3 molar ratio of at least about 0.15.

The collation film is preferably non-blocking and has a large incompatibility window with the individually wrapped packages (P) of a naked collation package and has a strong optical performance.

## Description

The present invention concerns a naked collation film, a naked collation package and a method of forming a naked collation package comprising said naked collation film.

Naked collation is an effective way to reduce packaging costs and materials. When a number of individually packaged articles, for example cigarette packs, are to be grouped together and packaged as a larger bundle for distribution or bulk retail, it is usual for the individual packages to be placed in a larger box or carton, before then being wrapped. Naked collation eliminates the need for the box or carton, thereby reducing packaging materials.

An essential characteristic of a naked collation film is that it must be capable of sealing to itself, but not (under the selected sealing conditions) to the film used to wrap each individual packet. It is therefore evident that a naked collation film must comprise inner and outer surfaces that are sealable to each other but not (under the selected sealing conditions) to the individual packet film (also known as the unit wrap film).

Another essential characteristic of a naked collation film is that it must be non-blocking. That is to say, it must not have a tendency to stick to itself even under the somewhat harsh conditions of temperature and pressure that may prevail in for example a shipping container or warehouse wherein multiple packages are likely to be stacked upon each other, or in compilation immediately post-production when the packs may still be somewhat warm following production. "Pack-to-pack blocking" under such circumstances is highly undesirable.

WO2009024810 is concerned with a naked collation package comprising an arrangement of individual packages, individually packaged in a polyolefinic filmic material, that are packed together in said naked collation package in a naked collation film, wherein the naked collation film comprises a sealable polyolefin film having a polyolefinic core layer C, an polyolefinic inner sealing layer A and a polyolefinic outer sealing layer B, the polyolefinic material of the inner sealing layer A being selected for sealing incompatibility with the filmic polyolefinic material of the individual packages under a specified sealing condition, and the polyolefinic material of the outer sealing layer B being selected for sealing compatibility with B and for sealing compatibility with A under the selected sealing condition, the individual packages being arranged in an ordered configuration inside the package and with the naked collation film wrapped around the ordered configuration of individual packages and sealed to itself (A to B) at a girth seal, and sealed to itself (B to B and optionally A to B) at envelope seals at each end of the package, there being no seal between the naked collation film and the filmic material of the individual packages.

WO2012164308 describes a method for forming a naked collation package comprising a) providing an arrangement of packages individually wrapped in a filmic material; b) providing a naked collation film for nakedly wrapping said individually wrapped packages, the naked collation film comprising a polyolefinic core layer C, an inner sealing layer A on the inner surface of the naked collation film and a polyolefinic outer sealing layer B on the outer surface of the naked collation film, the material of the inner sealing layer A being selected for sealing incompatibility with the filmic material of the individually wrapped packages under a specified sealing condition and heat shrinking condition, and the polyolefinic material of the outer sealing layer B being selected for sealing compatibility with B and for sealing compatibility with A under the specified sealing condition, wherein layers A and B are formed of different materials and layer B comprises at least one polyolefinic polymer and an antiblock component comprising at least 0.2% by weight of the layer of silicone; c) arranging the individually wrapped packages in an ordered configuration; d) arranging the naked collation film such that it at least partially surrounds, although is not necessarily in contact with, the ordered configuration of individually wrapped packages; and e) heat shrinking the naked collation film by exposing it to the heat shrinking condition, causing the naked collation film to shrink and closely surround the arrangement of packages, without being sealed to the packages.

WO2018096480 describes a biaxially oriented multilayer film particularly suitable for use as the external covering of articles packaged individually (naked collation packaging), wherein said biaxially oriented multilayer film comprises at least one external layer (A) comprising at least one ethylene polymer having a melting point ≤ 100°C, one central layer (B) which comprises at least one propylene polymer having a melting point ≥ 140°C, and one internal layer (C) comprising at least one ethylene polymer having a melting point 105°C-115°C and density 0.910-0.940 g/cm3.

US6358579 discloses sealable layers of individual packaging films composed of an ethylene homopolymer, of a copolymer of propylene as principal component and ethylene, preferably in amounts of not more than 10% by weight (based on the copolymer), of a copolymer of propylene as principal component and 1-butene, preferably in amounts of from 10 to 15% by weight (based on the copolymer), of a terpolymer made from propylene, ethylene and an alpha-olefin having from 4 to 10 carbon atoms, preferably one made from 93.2 to 99.0% by weight of propylene, from 0.5 to 1.9% by weight of ethylene and from 0.5 to 4.9% by weight of an alpha-olefin having from 4 to 10 carbon atoms, or of a mixture of these polymers.

US6777067 discloses a polypropylene film comprising at least one heat-sealable layer, and contains an extensive listing of suitable heat-sealable olefinic polymers, including copolymers and terpolymers.

US5900294 discloses a polyolefinic multilayer film comprises a base layer containing polypropylene and at least one outer layer. The outer layer comprises a C3/C4-olefin resin composition with a low degree of crystallinity and has a minimum heat-sealing temperature of below 84 DEG C. A process for the production of the multilayer film and the use thereof are also said to be described.

EP0645417 discloses a biaxially oriented polypropylene film whose n-heptane-insoluble content has a chain isotacticity index, measured by <13>C-NMR spectroscopy, of at least 95%. The base layer contains from 1 to 15% by weight of a natural or synthetic resin having a softening point of from 70 to 170 DEG C. The disclosure is also said to relate to a process for the production of the polypropylene film and to the use thereof.

DE3635928 discloses a multipack system comprising an arrangement of individual packs in which the individual packing takes place in a biaxially stretch-oriented polypropylene film having modified polyolefinic heat-sealing layers. The characterising features of the multipack system are said to be that the outer wrapping film comprises a heat-sealable, biaxially stretch-oriented multilayer polypropylene film produced by coextrusion with a symmetrical structure in which the outer layers contain an added low-molecular-weight hydrocarbon resin and have been corona-treated. The multipack system according to the disclosure is said to be distinguished by the fact that the outer wrapping film is heat-sealable to itself, but does not heat-seal the biaxially oriented polypropylene films of the individual packs.

US5302427 discloses a printable, biaxially oriented polyolefin multilayer packaging film which is low-temperature sealing on both sides and comprises a base layer and at least one sealing layer on each side of the base layer, the base layer containing a peroxide-degraded propylene homopolymer and each sealing layer containing an ethylene/propylene/butylene terpolymer and a propylene/butylene copolymer, one outer sealing layer containing a polydiorganosiloxane and silicon dioxide particles and not being corona-treated and the polydiorganosiloxane being added in the form of a masterbatch during the film production.

US5436041 discloses a transparent, printable, biaxially orientated polyolefin multilayer packaging film which can be sealed on both sides, having a base layer B and different top layers A and C located on both sides thereof in accordance with a layer build-up of ABC. The base layer B contains a peroxidically degraded polypropylene polymer having a degradation factor in the range from about 3 to about 10. Top layer A contains a polymer mixture of two or more of the following co- and/or terpolymers: a copolymer of ethylene and propylene or ethylene and butylene or propylene and butylene or ethylene and another alpha -olefin having 5 to 10 carbon atoms or propylene and another alpha -olefin having 5 to 10 carbon atoms, or a terpolymer of ethylene and propylene and butylene or ethylene and propylene and another alpha -olefin having 5 to 10 carbon atoms. This polymer mixture of top layer A further contains a high-viscosity polydiorganosiloxane and silicon dioxide and, optionally, other added additives. Top layer C contains a copolymer of ethylene and propylene or ethylene and butylene or propylene and butylene or ethylene and another alpha -olefin having 5 to 10 carbon atoms or propylene and another alpha -olefin having 5 to 10 carbon atoms, or a terpolymer of ethylene and propylene and butylene or ethylene and propylene and another alpha -olefin having 5 to 10 carbon atoms and, optionally, other additives. Top-layer C has a non-cohesive covering of polydialkylsiloxane on its outer surface.

US2013011669 discloses heat-sealable, oriented, multilayer films including i) a polyolefin core layer; and ii) a heat-sealable layer a blend of 10.0 wt % to 50.0 wt % of a propylene-based elastomer and 50.0 wt % to 90.0 wt % of a propylene-based polymer, wherein the heat-sealable layer includes less than 1.0 wt % ethylene homopolymer or ethylene-based copolymer and wherein the heat-sealable layer has a Haze of ≤5.0 and a seal strength of ≧2.00×102 g/2.54 cm at 82° C. (180° F.). In particular films, the heat-sealable layer has a Haze of ≤5.0 and a seal strength of ≧3.00×102 g/2.54 cm at 90° C. (194° F.). Methods of making such multilayer structures and articles made therefrom are also said to be disclosed.

EP3034300 discloses multilayer films for naked collation of packed products to form packs of 6 or more packed pieces comprising at least a core layer, an inner layer and an outer layer consisting of one or more olefin (co)polymers wherein outer layer (co)polymers having a melting temperature in the range 65°C-85°C, inner layer (co)polymers having a melting temperature in the range 65°C-105°C, core layer propylene and/or butene (co)polymers having melting temperature higher than 140°C, wherein the film wrapping the single packed units is formed of one or more olefin (co)polymers having melting temperature higher than 120°C, the inner layer of the multilayer films being in contact with the film wrapping the single packed units (film O) forming the package the outer layer of the multilayer film has a thickness comprised between 0.35 and <0.5 µm.

The object of the present invention is to provide a naked collation film with improved performance, for example with respect to providing a high incompatibility window, good sealing conditions at low sealing temperatures and strong optical performance whilst avoiding problems of pack-to-pack blocking.

Surprisingly, it has been found that the sealing properties of the sealing layers of naked collation films can be improved by an enhanced C4 polyolefin content therein.

Accordingly, in one aspect the invention provides a naked collation film comprising a polyolefinic inner sealing layer on one surface of the film and a polyolefinic outer sealing layer on the opposite surface of the film, the outer sealing layer being sealable to itself and to the inner sealing layer and both the inner and outer sealing layers comprising C4, and at least one of C2 and C3 polyolefins, preferably C2, C3 and C4 polyolefins, wherein at least one of the sealing layers has a C4 polyolefin content of greater than 10mol%, preferably greater than 10.5 mol%, more preferably greater than 11.0mol%, still more preferably greater than 11.5mol%, most preferably greater than 12.0mol% relative to the total polyolefin content of that sealing layer.

In a related aspect the invention provides a naked collation film comprising a polyolefinic inner sealing layer on one surface of the film and a polyolefinic outer sealing layer on the opposite surface of the film, the outer sealing layer being sealable to itself and to the inner sealing layer and both the inner and outer sealing layers comprising C2 and C4, and optionally also C3 polyolefin, preferably C2, C3 and C4 polyolefins, wherein at least one of the sealing layers has a C4:C2 molar ratio of at least 1.2, preferably at least 1.5, more preferably at least 1.6, most preferably at least 1.7.

In a related aspect the invention provides a naked collation film comprising a polyolefinic inner sealing layer on one surface of the film and a polyolefinic outer sealing layer on the opposite surface of the film, the outer sealing layer being sealable to itself and to the inner sealing layer and both the inner and outer sealing layers comprising C3 and C4 polyolefins, and optionally also C2 polyolefin, preferably C2, C3 and C4 polyolefins, wherein at least one of the sealing layers has a C4:C3 molar ratio of at least 0.15, preferably at least 0.16, more preferably at least 0.17, most preferably at least 0.20.

The naked collation films according to the above aspects are non-blocking. By "non-blocking" is meant that the films pass the pack-to-pack blocking test detailed herein.

The invention also provides naked collation package comprising a plurality of individually wrapped packages packaged within a sealed naked collation film as defined above.

Preferably each individually wrapped package comprises a further polyolefin film in contact with said inner sealing layer.

The further polyolefin film may or may not contain C4, and will typically contain at least two of C2, C3 and C4, or at least one of C2, C3 and C4 in combination with other polymers or copolymers or blends thereof, such as copolymers including C6 and/or C8. The further polyolefin film may be a multi-layer film, in which case the outer layer (which in use of the invention will generally be in contact with the inner sealing layer of the naked collation film) may or may not contain C4, and will typically contain at least two of C2, C3 and C4.

The terms "in", "inner", "out" and "outer" are to be construed to mean the inner or outer surface of a layer of the naked collation film, the naked collation film, the unit wrap film and/or the film in use. The use of such term to designate the surface of the layers should not be taken as limiting and it would be understood by the skilled person that "in" and "inner" or "out" and "outer" are interchangeable. For example, the skilled person would understand that "IN/IN" would be construed to be the same as "inner/inner".

The invention also provides a method for forming a naked collation package comprising:
a) providing an arrangement of individually wrapped packages;
b) providing a naked collation film as defined above;
c) arranging the individually wrapped packages in an ordered configuration;
d) arranging the naked collation film such that it at least partially surrounds, although is not necessarily in contact with, the ordered configuration of individually wrapped packages; and
e) sealing the naked collation film by exposing it to a sealing condition, causing the naked collation film to seal to itself and closely surround the arrangement of packages, without being sealed to the packages.

In some cases, there may be an additional step comprising heat shrinking the naked collation film by exposing it to a heat shrinking condition, causing the naked collation film to shrink and closely surround the arrangement of packages, without being sealed to the packages.

The method preferably further comprises one or more of the following steps, which can be performed before or after any of steps a) to d), if appropriate: a-1) forming a film tube with overlapping edges; a-2) forming a girth seal by sealing together the overlapping edges of a film tube; a-3) forming envelope seals at each end of the package by folding in a film tube and sealing the folded ends.

Further details of such methods, albeit with different naked collation films, are disclosed in WO 2012/164308A, in the name of the present applicant.

Further preferred features are defined in the dependent claims.

The inventors of the present invention have surprisingly found that a naked collation film with a monomeric ratio content as provided herein is advantageous for many reasons. For example, the naked collation film wrap according to the present invention exhibits an increased performance incompatibility window (i.e., an increased range of sealing temperature of the naked collation film below the temperature at which (undesirable) sealing occurs between the naked collation film and the film of an individually wrapped package within the naked collation film). The naked collation films of the invention exhibit advantageously low seal initiation temperatures and strong optical properties.

It is possible to manufacture films which have a relatively large incompatibility window but which are nevertheless unsuitable for use in naked collation packaging because of their tendency to block. It would appear for example that a film manufactured to contain a single low melting C3/C4 copolymer in its sealing layers (comparative example C1 described below) is wholly unsuitable for its intended application on account of its blocking tendency.

To avoid blocking - and thus render the film "non-blocking" - it is preferable for at least the outer sealing layer of the naked collation film to comprise at least one copolymer or terpolymer having a melting point above 75°C, preferably above 80°C.

The term "multilayer film" is to be construed in accordance with the normal use of the word to relate to a film comprising at least 2 layers. The multilayer film may, for example, comprise at least 2 layers, at least 3 layers, at least 4 layers, or more.

Accordingly, in some embodiments the film may comprise an inner layer, an outer layer, and at least one core layer.

For avoidance of doubt, any characteristics or the like described in accordance with the "multilayer film" of the invention may be construed to refer to the characteristics of the multilayer film itself (i.e. including all the layers present in the multilayer film) and/or referring to one or more of the individual layers of said multilayer film. Such disclosure will be clear to the skilled person.

Unless the context dictates otherwise, the monomeric ratios of the polymeric film, for example the monomeric ratio of C4/C3, is to be construed as the average monomeric molar ratio of the polymers in the particular layer of the multilayer film being referred to in context. Therefore, the monomeric content will typically be spoken of in the context of the monomeric ratio of one or more of the individual layers of said multilayer film.

The multilayer polymeric film may optionally comprise a blend of polyolefinic copolymers. Each polyolefinic copolymer may optionally comprise at least one copolymer of propylene and ethylene or butylene. The polyolefinic copolymer may optionally comprise at least one terpolymer, optionally wherein the terpolymer is of ethylene, propylene and butene.

By "copolymers" in this sense it is meant any number of constituent polymer parts, for example, ethylene, propylene, butene, or any olefin having up to 10 carbon atoms. Bipolymers, terpolymers and copolymers of four or more constituent polymer parts fall under the term "copolymer", for example. Additionally, both random and block copolymers are included in this definition and said multilayer polymer film and/or the individual layers of said film may additionally or alternatively comprise blends of one or more homopolymers, copolymers or mixtures thereof. The inner and/or outer layers of the multilayer film may be the same or different.

Where the multilayer polymeric film comprises at least one terpolymer of ethylene, propylene and butene, propylene is preferably present as the principal constituent.

The composition of the inner and outer sealing layer of the naked collation film may be the same or different.

The inner layer and/or the outer sealing layer of the film may optionally comprise C2 olefinic polymer in an amount of between about 0 and about 20 mol%, for example between about 1 and about 15 mol%, or from about 2 to about 12 mol %.

The inner layer and/or the outer sealing layer of the film may optionally comprise C3 olefinic polymer in an amount of between about 55 mol% and about 95 mol%, between about 60 mol% and about 90 mol%, between about 65 mol% and about 85 mol%, between about 70 mol% and about 85 mol%.

The inner sealing layer and/or the outer sealing layer of the film may comprise C4 olefinic polymer in an amount of between about 10 mol% and about 40 mol%, for example between about 10 mol% and about 35 mol%, for example between about 10 mol% and about 30 mol%, for example between about 10 mol% and about 25 mol%, for example between about 10 mol% and about 20 mol%.

One or both of the inner and outer sealing layers may comprise C2, C3 and C4 polyolefins.

One or both of the inner and outer sealings layers may comprise at least two co-polymers and/or one terpolymer.

The inner and/or outer layer layers of the multilayer polymeric film are to be construed as sealing layers. The naked collation multilayer film may for example have sealing compatibility with itself (A to B, A to A and/or B to B) at the sealing condition, but has sealing incompatibility (at the sealing condition) with the filmic polyolefinic material of an individually wrapped package. One way such sealing incompatibility can be provided is by providing films according as described herein.

The term "sealing compatibility" or "compatibility" is to be construed to mean that the seal strength at the sealing condition is at least 200g/25mm. Thus, sealing compatibility refers to a substantial functional seal at the selected sealing condition between respective sealing layers (whether inner or outer) of the multilayer polymeric film.

The term "sealing incompatibility" or "incompatibility" is to be construed to mean that the seal strength at the sealing condition is less than 50g/25mm. Thus, sealing incompatibility refers to a substantial absence of sealing at the selected sealing condition between the inner sealing layer and the external outer surface of the filmic polyolefinic material of the individually wrapped packages.

The naked collation film may be construed to exhibit tack between the inner layer of a naked collation film and the outer layer of a naked collation film and/or unit wrap when the film is heated to a temperature above the sealing initiation temperature. The term "tack" is to be construed to mean a seal strength at the sealing condition of greater than 50g/25mm, but substantially under 200g/25mm, which is undesirable.

The films used in the processes of the present invention are preferably non-blocking and therefore exhibit good (i.e. low) thermal blocking properties.

Without wishing to be bound by theory, the inventors of the present invention have advantageously found that good thermal blocking properties are achieved with films according to the present invention due to the sealing layers comprising C4 and at least one of C2 and C3.

It will be understood that the naked collation film according to the invention may optionally comprise additional layers as well as the hitherto identified inner and outer layers. Such additional layers may for example include lamination layers, printable layers, UV barrier layers, oxygen permeability or barrier layers, water vapour permeability or barrier layers, and the like. When present, such additional layers may be provided by co-extrusion, by post-coextrusion coating, by coextrusion coating or by combinations of two or more thereof, for example.

The polymeric film may be made by any process in the art, including, but not limited to, cast sheet, cast film, or blown film.

The naked collation film of the present invention can be of a variety of thicknesses according to the application requirements. For example, they may be from about 10 to about 240µm thick, preferably from about 12 to 50µm thick, and most preferably from about 15 to about 30µm thick.

Each sealing layer may for example independently have a thickness of from about 0.05µm to about 2µm, preferably from about 0.075µm to about 1.5µm, more preferably from about 0.1 µm to about 1.0µm, most preferably from about 0.15µm to about 0.5µm.

The naked collation film may optionally comprise, for example, in at least one of the layers functional materials for other purposes, for example, relating to the functional or aesthetic characteristics of the film.

Suitable functional materials may be selected from, but are not limited to, one or more of the following, mixtures therefore and/or combinations thereof UV absorbers, dyes; pigments, colorants, metallised and/or pseudo-metallised coatings; lubricants, anti-static agents (cationic, anionic and/or non-ionic, e.g. poly-(oxyethylene) sorbitan monooleate), anti-oxidants (e.g. phosphorous acid, tris (2,4-di-tert-butyl phenyl) ester), surface-active agents, stiffening aids, slip aids (for example hot slips aids or cold slip aids which improve the ability of a film to slide satisfactorily across surfaces at about room temperature, e.g. micro-crystalline wax; gloss improvers, prodegradants, barrier coatings to alter the gas and/or moisture permeability properties of the film (such as polyvinylidene halides, e.g. PVdC); anti-blocking aids (for example microcrystalline wax, e.g. with an average particle size from about 0.1 to about 0.6 µm); tack reducing additives (e.g. fumed silica, silica, silicone gum); particulate materials (e.g. talc); additives to increase COF (e.g. silicon carbide); additives to improve ink adhesion and/or printability, additives to increase stiffness and/or increase shrinkage (e.g. hydrocarbon resin and/or hydrogenated hydrocarbon resin). By way of specific and non-limiting examples, the hydrocarbon resin and/or hydrogenated hydrocarbon resins that may be used to increase stiffness and/or increase shrinkage may comprise one or more of C5 resins and/or C9 resins. For example, suitable C5 resins and/or C9 resins may include Constab^{™} MA 00956 PP, Oppera^{™} PR 120, Regalite^{™} R 1125, Arkon^{™} P-125 and/or mixtures of two or more thereof.

The naked collation film according to the present invention may be used as overpacking or as a wrap around a configuration of articles, for example cigarette packets, that are individually wrapped in a filmic material. The filmic material may, for example, be a polyolefin material.

In this context, the filmic material may be construed as a "unit wrap".

The unit wrap may comprise at least one layer, at least two layers, or at least three layers, for example. Accordingly, the unit wrap may at least comprise an internal and external surface.

The external surface of the filmic material of the unit wrap preferably comprises at least one polyolefinic component. Typically these may comprise one or more of C2, C3 and/or C4, and sometimes C8 olefinic polymers. C3 olefinic polymer is the predominant material in preferred embodiments.

The inventors of the present invention have surprisingly found that such arrangements provide a large incompatibility window as described herein.

The C4 mol % content of the naked collation film is preferably greater in the naked collation film than in the filmic material of the unit wrap.

The C4 mol % content of the inner layer of the naked collation film is preferably greater in the naked collation film inner layer than in the outer layer of the filmic material of the unit wrap.

The film material wrapping the individual packets, for example a polyolefinic material, suitably comprises a polypropylenic (C3) olefinic polymer and may further comprise C2 and/or C4 olefinic polymers.

For the avoidance of doubt, all features relating to naked collation film, also relate, where appropriate to the use of the naked collation film and the method for forming a naked collation package and *vice versa.*

Preferred embodiments of the invention are described below by way of example only with reference to Figures 1 to 4 of the accompanying drawings, wherein:
Figure 1 is a schematic cross-section of a naked collation film in accordance with the present invention in contact with a package to form a naked collation package;
Figure 2 is a plot of incompatibility window: C4 mol % content of Examples of naked collation films of the present invention;
Figure 3 is a plot of incompatibility window: C4:C3 mol ratio of Examples of naked collation films of the present invention, and
Figure 4 is a plot of incompatibility window: C4:C2 mol ratio of Examples of naked collation films of the present invention.

### EXAMPLES

### Preparation of Films

13 random copolymers were prepared and designated with a Polymer Reference from A to M. These copolymers may be obtained, for example, by polymerizing the monomers by known polymerization methods such as gas-phase methods, bulk methods and slurry methods in the presence of catalysts such as Ziegler-Natta catalysts and metallocene catalysts. Further details of such methods may be found in EP0483675, US2017037161 and WO18211107.

16 samples of biaxially oriented film were prepared using a standard bubble process in which polymer layers are extruded from a core extruder and sealing layer extruders to create a three-layer polymer tube. This polymer tube passes through a cooling system and is subsequently re-heated blown to form a bubble by passing air down the inside of the polymer tube. This bubble is then cooled before being collapsed by convergence rollers, slit to form two polymeric film sheets, processed over rollers and surface treated by corona treatment before being collected in rolls. Further details of the bubble process may be found in, for example, EP0410792 and GB2000175.6 and Biaxial Stretching of Film, Principles and Applications, 2011, Ed. Mark T. DeMeuse, ISBN 978-1-84569-675-7.

Prior to extrusion, a standard antiblock/slip package was added to the polymer mixture of the sealing layer(s) to assist downstream processing. The antiblock/slip package added to the outer layer comprised 1.2% PDMS (silicone gum) and 0.1% silica AB. The antiblock/slip package added to the inner layer comprised 0.5% PDMS (silica gum) and 0.1% silica AB.

All the film samples in accordance with the invention tested below comprised the same antiblock/slip package as described above.

In all cases the core layer of the films were composed of polypropylene homopolymer.

Details of the 16 film samples and their sealing layer polymer contents (IN and OUT - wherein "IN" designates the side of the film which in use forms the inner surface of the naked collation film in a naked collation package; and "OUT" designates the outer surface of the film in use) are given in Table 1 and Table 2 below.

Sample 3 comprises at most 8.4 mol% C4 in its sealing layers, a C4/C2 mol ratio of at most 0.84 and a C4/C3 mol ratio of at most 0.1 and is therefore a comparative Example.

### Melting Temperature (Tₘ / °C)

The method used to determine the melting point (Tₘ) in the below examples of the polymers is similar to the method used in accordance with ASTM D3418. However, the method used for determining the Tₘ of the polymers in Table 1 uses a faster heating rate than in ASTM D3418, thus, the observed melting point is approximately 2% higher than that seen when measured by ASTM D3418.

The melting temperature of the polymer samples were determined by the following method:
A differential scanning calorimeter (Perkin Elmer Diamond^{™} DSC) capable of heating or cooling at rates in excess of 20°C per minute was used.

The DSC was first calibrated using the same heating rate as that to be used for the samples (20°C/minute). A known weight of indium (ca. 10mg) was crimped into an aluminium pan and heated from 0°C to 170°C at 20°C per minute using an uncalibrated temperature scale. The temperature scale of the instrument was checked against the observed melting point of the standard. The observed melting point for these materials should be taken as the onset of melting.

Polymer granules were cut to size to give a mass of approximately 8.5 mg. This size adequately fits into the aluminium sample pan. The side of the sample facing the base of the pan should be flat and smooth.

Films were punched out to a size approximately equal to the sample pan dimensions, for example a paper hole punch may be used to create the required size, and crimped tightly to ensure good contact is made with the base of the sample pan. The base of the sample pan should not be damaged or deformed to ensure good contact with the heat source.

Approximately 8.5 mg of the sample was weighed to an accuracy of 0.01 mg and crimped tightly into the aluminium sample pan. If the sample was considered likely to release decomposition gases resulting in pressure build up, the pan was pierced in the centre of the lid.

The sample was placed into the centre of the cell and a purge of nitrogen was maintained throughout the test at 30ml/minute to provide an inert atmosphere.

An initial heating step was carried out at 20°C/minute from 0°C to 210°C. The sample was held at 210°C for three minutes to ensure complete melting had occurred and to eliminate the thermal history. The sample was then cooled at 20°C/minute to 0°C and a resulting cooling curve was recorded. This curve may be used for the determination of any crystallisation transitions.

The sample was immediately re-heated to 210°C at 20°C/minute and the resulting heating curve was recorded. This curve was used for the determination of any melting transitions. The observed melting point was taken as the onset of melting.

### Weight Average Molecular Weight (M_{w} / g/mol), Number Average Molecular Weight (Mₙ / g/mol), Intrinsic Viscosity (IV / dL/g), Radius of Hydration (Rh / nm) and Radius of Gyration (Rg / nm)

13 samples of polymer pellets were analysed by High Temperature Gel Permeation Chromatography (HT-GPC) to determine weight average molecular weight (M_{w}) and number average molecular weight (Mₙ). Intrinsic viscosity, radius of hydration and radius of gyration data was also obtained for each polymer.

The samples were dissolved in 1,2,4-Trichlorobenzene at 160°C and stirred for 55 minutes before being transferred to 115°C and further stirred until the sample was analysed. An aliquot was injected onto a Gel Permeation Chromatograph operating at 160°C. Triple detection by refractive index, viscometry and light scattering were used for molecular characterisation. Duplicate aliquots were analysed and average results reported.

**Table 1**

| **Polymer Ref** | **Type of Polymer** | **MFI / g/10 min (230°C/2.16kg) (measured in accordance with ASTM D1238)** | **Tₘ / °C (measured as described above)** | **Weight Average Molecular Weight (M_{w}) / g/mol** | **Number Average Molecular Weight (Mₙ) / g/mol** | **Intrinsic Viscosity IV, dL/g** | **Radius of Hydration Rh, nm** | **Radius of Gyration, nm** |
|---|---|---|---|---|---|---|---|---|
| A | C3-C4 copolymer | 7 | 75 | 290000 | 192000 | 1.44 | 17.9 | 16.5 |
| B | C3-C4 copolymer | 7 | 98 | 282000 | 189000 | 1.45 | 17.8 | 15.7 |
| C | C3-C2-C4 terpolymer | 9 | 130 | 284000 | 139000 | 1.49 | 17.3 | 17.1 |
| D | C3-C2 copolymer | 8 | 145 | 266000 | 144000 | 1.41 | 17.0 | 15.8 |
| E | C3-C2-C4 terpolymer | 7.3 | 129 | 342000 | 151000 | 1.65 | 18.9 | 18.4 |
| F | C3-C2-C4 terpolymer | 9 | 130 | 282000 | 148000 | 1.42 | 17.1 | 15.8 |
| G | C3-C2 copolymer | 8 | 76.5 | 224000 | 154000 | 1.38 | 16.3 | 14.4 |
| H | C3-C2-C4 terpolymer | 9 | 128 | 271000 | 151000 | 1.39 | 17.0 | 16.0 |
| I | C3-C2 copolymer | 8 | 107 | 235000 | 162000 | 1.38 | 16.5 | 14.5 |
| J | C3-C2-C4 terpolymer | 6 | 135 | 322000 | 156000 | 1.57 | 18.4 | 18.3 |
| K | C3-C4 copolymer | 5 | 131 | 362000 | 162000 | 1.63 | 19.2 | 20.7 |
| L | C3-C2-C4 terpolymer | 5.5 | 128 | 319000 | 168000 | 1.56 | 18.5 | 17.5 |
| M | C3-C4 copolymer | 10.5 | 149 | 336000 | 131000 | 1.53 | 17.8 | 16.9 |

**Table 2**

| **Sample** | **Polymer Ref** | **Content** | | | **Sample** | | **Content (IN)** | | | **Content (OUT)** | | | **Seal Initiation Temperature/ °C (SIT)** | | | **Incompatibility Window / °C** | | |
|---|---|---|---|---|---|---|---|---|---|---|---|---|---|---|---|---|---|---|
| | | **C2** | **C3** | **C4** | **IN** | **OUT** | **C2** | **C3** | **C4** | **C2** | **C3** | **C4** | **(IN/IN)** | **(IN/ OUT)** | **(OUT/ OUT)** | **GLT20** | **GLS20** | **ZXA20** |
| 1 | A | - | 74 | 26 | - | 30% | - | - | - | - | 22.2 | 7.8 | 100 | 98 | 90 | 8 | 10 | 12 |
| | B | - | 82 | 18 | 50% | - | - | 41 | 9 | - | - | - | | | | | | |
| | C | 8 | 78 | 14 | 50% | 70% | 4 | 39 | 7 | 5.6 | 54.6 | 9.8 | | | | | | |
| 2 | A | - | 74 | 26 | - | 30% | - | - | - | - | 22.2 | 7.8 | 98 | 98 | 100 | 12 | 20 | 18 |
| | D | 6 | 94 | - | 50% | - | 3 | 47 | - | - | - | - | | | | | | |
| | E | 1 | 86 | 13 | - | 70% | - | - | - | 0.7 | 60.2 | 9.1 | | | | | | |
| | F | 7 | 72 | 21 | 50% | - | 3.5 | 36 | 10.5 | - | - | - | | | | | | |
| 3 (Compa rative) | G | 13 | 87 | - | 40% | 70% | 5.2 | 34.8 | - | 9.1 | 60.9 | - | 122 | 122 | 118 | -2 | -10 | 2 |
| | C | 8 | 78 | 14 | 60% | 30% | 4.8 | 46.8 | 8.4 | 2.4 | 23.4 | 4.2 | | | | | | |
| 4 | G | 13 | 87 | - | - | 70% | - | - | - | 9.1 | 60.9 | - | 104 | 114 | 116 | -2 | 2 | 4 |
| | H | 6 | 75 | 19 | 100 % | - | 6 | 75 | 19 | - | - | - | | | | | | |
| | E | 1 | 86 | 13 | - | 30% | - | - | - | 0.3 | 25.8 | 3.9 | | | | | | |
| 5 | I | 4 | 96 | - | - | 70% | - | - | - | 2.8 | 67.2 | - | n/a | 138 | 116 | 4 | -6 | 0 |
| | J | 8 | 76 | 16 | 100 % | - | 8 | 76 | 16 | - | - | - | | | | | | |
| | C | 8 | 78 | 14 | - | 30% | - | - | - | 2.4 | 23.4 | 4.2 | | | | | | |
| 6 | B | - | 82 | 18 | 50% | - | - | 41 | 9 | - | - | - | 104 | 112 | 114 | -2 | -2 | 0 |
| | I | 15 | 85 | - | - | 70% | - | - | - | 10.5 | 59.5 | - | | | | | | |
| | C | 8 | 78 | 14 | 50% | - | 4 | 39 | 7 | - | - | - | | | | | | |
| | E | 1 | 86 | 13 | - | 30% | - | - | - | 0.3 | 25.8 | 3.9 | | | | | | |
| 7 | A | - | 74 | 26 | - | 25% | - | - | - | - | 18.5 | 6.5 | 100 | 98 | 98 | 10 | 22 | 24 |
| | C | 8 | 78 | 14 | 50% | - | 4 | 39 | 7 | - | - | - | | | | | | |
| | B | - | 82 | 18 | 50% | - | - | 41 | 9 | - | - | - | | | | | | |
| | F | 7 | 72 | 21 | - | 75% | - | - | - | 5.25 | 54 | 15.75 | | | | | | |
| 8 | A | - | 74 | 26 | - | 15% | - | - | - | - | 11.1 | 3.9 | 98 | 88 | 84 | 14 | 26 | 28 |
| | D | 6 | 94 | - | 50% | - | 3 | 47 | - | - | - | - | | | | | | |
| | K | 5 | 68 | 28 | - | 85% | - | - | - | 4.25 | 57.8 | 23.8 | | | | | | |
| | F | 7 | 72 | 21 | 50% | - | 3.5 | 36 | 10.5 | - | - | - | | | | | | |
| 9 | G | 13 | 87 | - | 40% | - | 5.2 | 34.8 | - | - | - | - | 120 | 110 | 100 | 10 | 4 | 14 |
| | B | - | 82 | 18 | - | 65% | - | - | - | - | 53.3 | 11.7 | | | | | | |
| | F | 7 | 72 | 21 | - | 35% | - | - | - | 2.45 | 25.2 | 7.35 | | | | | | |
| | C | 8 | 78 | 14 | 60% | - | 4.8 | 46.8 | 8.4 | - | - | - | | | | | | |
| 10 | L | 9 | 71 | 20 | - | 100 % | - | - | - | 9 | 71 | 20 | 90 | 100 | 104 | 4 | 10 | 14 |
| | H | 6 | 75 | 19 | 100 % | - | 6 | 75 | 19 | - | - | - | | | | | | |
| 11 | M | - | 90 | 10 | - | 15% | - | - | - | - | 13.5 | 1.5 | 118 | 114 | 106 | 8 | 4 | 8 |
| | J | 8 | 76 | 16 | 100 % | - | 8 | 76 | 16 | - | - | - | | | | | | |
| | L | 9 | 71 | 20 | - | 85% | - | - | - | 7.65 | 60.35 | 17 | | | | | | |
| 12 | B | - | 82 | 18 | 50% | - | - | 41 | 9 | - | - | - | 102 | 98 | 92 | 14 | 12 | 18 |
| | D | 6 | 94 | - | - | 30% | - | - | | 1.8 | 28.2 | - | | | | | | |
| | C | 8 | 78 | 14 | 50% | - | 4 | 39 | 7 | - | - | - | | | | | | |
| | K | 5 | 68 | 28 | | 70% | - | - | - | 3.5 | 47.6 | 19.6 | | | | | | |
| 13 | D | 6 | 94 | - | 50% | 15% | 3 | 47 | - | 0.9 | 14.1 | - | 100 | 104 | 104 | 12 | 14 | 20 |
| | F | 7 | 72 | 21 | 50% | - | 3.5 | 36 | 10.5 | - | - | - | | | | | | |
| | L | 9 | 71 | 20 | - | 85% | - | - | - | 7.65 | 60.35 | 17 | | | | | | |
| 14 | G | 13 | 87 | - | - | 50% | - | - | - | 6.5 | 43.5 | - | 90 | 98 | 106 | 4 | 12 | 8 |
| | L | 9 | 71 | 20 | - | 50% | - | - | - | 4.5 | 35.5 | 10 | | | | | | |
| | H | 6 | 75 | 19 | 100 % | | 6 | 75 | 19 | - | - | - | | | | | | |
| 15 | I | 15 | 85 | - | - | 60% | - | - | - | 9 | 51 | - | 119 | 110 | 102 | 6 | 6 | 24 |
| | J | 8 | 76 | 16 | 100 % | - | 8 | 76 | 16 | - | - | - | | | | | | |
| | F | 7 | 72 | 21 | - | 40% | - | - | - | 2.8 | 28.8 | 8.4 | | | | | | |
| 16 | B | - | 82 | 18 | 50% | - | - | 41 | 9 | - | - | - | 108 | 112 | 114 | 2 | 2 | 2 |
| | I | 4 | 96 | - | - | 70% | - | - | - | 2.8 | 67.2 | - | | | | | | |
| | C | 8 | 78 | 14 | 50% | - | 4 | 39 | 7 | - | - | - | | | | | | |
| | L | 9 | 71 | 20 | - | 30% | - | - | - | 2.7 | 21.3 | 6 | | | | | | |

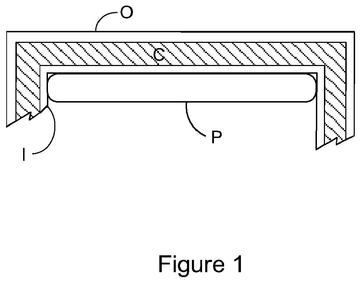

Referring to Figure 1, each sample comprises a core layer C of homopolymer (polypropylene) and two coextruded sealing layers of ethylene-propylene, or propylene-butylene copolymers or ethylene-propylene-butylene terpolymers in the blended amounts indicated in Table 2 on respective surfaces of the core layer, namely one outer layer O (designated "OUTER") and one inner layer I (designated "INNER"). Each sample comprises in its sealing layers a blend of polymeric materials as detailed.

The "content" column with subheadings "C2", "C3" and "C4" give the molar percentages of each polymer in the copolymer and/or terpolymer blend in a given sample and the following two columns with the heading "Sample " and subheadings "IN" and "OUT" give the molar percentages of each polymer in the copolymers and/or terpolymers constituting the INNER layer and OUTER layer respectively.

Thus, for example - Sample 1 comprises in its sealing layers three different components:
Polymer A,
Polymer B,
Polymer C,
of which the INNER sealing layer comprises 50mol% Polymer B and 50mol% Polymer C and the OUTER sealing layer comprises 30mol% Polymer A and 70mol% Polymer C. Accordingly, the C2 content of the inner sealing layer is 4 mol% since Polymer C has a C2 content of 8 mol % and Polymer B has a C2 content of 0 mol% and the C2 content of the OUTER sealing layer of Sample 1 is 5.6 mol% since Polymer C has a C2 content of 8 mol % and Polymer A has a C2 content of 0 mol%, but Polymer C copolymer contributes 70% of the total in the outer sealing layer.

The sealing initiation temperatures required for sealing the INNER and OUTER sealing layers of each of the samples were determined by the following method:
The seal initiation temperature (SIT) is considered to be the lowest temperature at which a seal is formed under a set pressure and dwell time between two surfaces of a film, and its strength is at least 200g/25mm. For the below examples, the seal initiation temperature of the IN/OUT seal of the naked collation film was taken to be the lowest temperature at which a seal strength of at least 200g/25mm was achieved.

The seals in these examples were prepared using an RDM heat sealer with a pressure set at 5psi and a dwell time at 0.5 seconds, in accordance with ASTM F2029. The seal strength was determined using an RDM seal puller, after cooling, in accordance with ASTM F88. The seal strength was measured using an RDM puller with a pulling speed (or jaw separation rate) at 300 mm/min. The peak strength was recorded as the seal strength.

The RDM heat sealer jaw configuration was metal to rubber. The upper jaw was made of metal with a Teflon coating applied to the surface to prevent the film from sticking to the jaw. The lower jaw was made of a metal base with a rubber top. During the test, the upper jaw was heated and the lower jaw was maintained at ambient temperature (atmospheric pressure (101.325 kPa) and a temperature of 25°C). Thus, only the upper jaw was heated.

The sample was cut in a machine direction into 25 mm wide strips. To determine the SIT of the sample, the temperature of the upper jaw started at a low temperature, for example 65°C (the starting temperature is dependent on film surface configuration, for example IN/IN, OUT/OUT, IN/OUT). For each different temperature setting, three seals (film cut in a machine direction) were made, and an average seal strength was calculated. After the average seal strength was recorded, the sealing temperature was increased by 2°C and the procedure was repeated until the seal strength reached at least 200g/25mm. For these examples, the lowest temperature at which a seal strength reached at least 200g/25mm occurred is referred to as the seal initiation temperature.

The tack initiation temperature required for tacking the INNER sealing layer to a unit wrap packaging film commonly used for packaging individual items (shown as package P in Figure 1) within a naked collation package was also determined, in respect of three 20 µm thickness commercially available unit wrap films designated GLT, GLS and ZXA. GLT and GLS are commercially available from Innovia Films Limited of Lowther R & D Centre, West Road, Wigton, Cumbria, England, CA7 9XX; ZXA is commercially available from Innovia Films México S.A. de C.V. of AV. Colorines 255, Col Centro, Zacapu, C.P. 58600 Michoacán, Mexico. For the purposes of these examples 20µm thickness unit wrap films were selected, and consequently GLT, GLS and ZXA films are respectively designated herein as GLT20, GLS20 and ZXA20. Each unit wrap packaging film has a three layer structure comprising a homopolymeric polypropylene core layer and inner and outer copolymeric skin layers. The outer skin layers, these being the layers adjacent the naked collation film in use of the invention, comprise: in the case of GLT a terpolymer of polyethylene, polypropylene and polybutylene, having a C4 content of 15.3 mol%; in the case of GLS a blend of copolymers of polyethylene and polyhexylene and of polyethylene and polyoctylene, having a C4 content of 0 mol %; and in the case of ZXA a copolymer of polyethylene and polypropylene, having a C4 content of 0 mol %. GLS and GLT films were produced by a bubble process; ZXA by a tenter process.

The lowest temperature at which tacking (a seal strength of at least 50g/25mm) between the INNER layer of the naked collation film and the OUTER layer of the unit wrap packaging film was achieved was measured and compared against the lowest temperature at which a seal strength of at least 200g/25mm was achieved (the SIT) for that of the naked collation film sample to itself (IN/OUT) and the difference presented as the "incompatibility window". A positive incompatibility window is necessary for efficacy, and generally the larger the incompatibility window the better.

The incompatibility window, namely the tack initiation temperature required for tacking the INNER layer of the naked collation film to the OUTER layer of the unit wrap packaging film minus the sealing temperature required for sealing the naked collation film sample to itself (IN/OUT) was determined using a three-layer hybrid test as described below.

The incompatibility window was determined using the temperature range between the seal initiation temperature (SIT) of the IN/OUT seal of the naked collation film (at least 200g/25mm), the method of which is described above, and the temperature where tack occurs (> 50g/25mm) between the inner layer of the naked collation film and the outer layer of the unit wrap film.

The incompatibility window was determined using a laboratory heat sealer in accordance with ASTM F2029 and a seal strength tester (after cooling in accordance with ASTM F88).

Three 25 mm wide strips, cut in a machine direction, of naked collation film and unit wrap were tested using a laboratory heat sealer (RDM) with a pressure set at 5psi and a dwell time at 0.5 seconds. The seal strength was measuring using an RDM seal puller with a pulling speed (or jaw separation rate) set at 300 mm/min.

The RDM heat sealer jaw configuration used in this test was metal to rubber. The upper jaw was made of metal with a Teflon coating applied to the surface to prevent film from sticking to the jaw. The lower jaw was made of a metal base with a rubber top. During the test, the upper jaw was heated, and the lower jaw was maintained at ambient temperature (atmospheric pressure (101.325 kPa) and a temperature of 25°C). To determine the SIT of the sample, the temperature of the upper jaw started at a low temperature, for example 65°C

The film strips were arranged in a configuration of (top) naked collation / naked collation / unit wrap (bottom). The inner surface of each strip was facing downwards.

The first part of the test determines the seal initiation temperature (SIT) of the naked collation IN/OUT surface configuration. The upper jaw temperature was increased by 2°C until the seal strength reached at least 200g/25mm; for the below examples, this temperature is referred to as SIT. When this point is reached, the bottom strip of the unit wrap will peel away from top naked collation/naked collation seal.

The test continues until the temperature at which "tack" between the inner layer of the naked collation film and the outer layer of the unit wrap film occurs. In the following examples, "tack" is said to occur when the seal strength is at least 50g/25mm.

The results, together with the molar percentages of C4 content of the INNER and OUTER sealing layers of samples 1 to 16 are set out in Table 3 below:

**Table 3**

| **Sample** | **C4 mol% (INNER)** | **C4mol% (OUTER)** | **Incompatibility window (ºC)-GLT20** | **Incompatibility window (ºC)-GLS20** | **Incompatibility window (ºC)-ZXA20** |
|---|---|---|---|---|---|
| **1** | 16 | 17.6 | 8 | 10 | 12 |
| **2** | 10.5 | 16.9 | 12 | 20 | 18 |
| **3** | 8.4 | 4.2 | -2 | -10 | 2 |
| **4** | 19 | 3.9 | -2 | 2 | 4 |
| **5** | 4.2 | 16 | 4 | -6 | 0 |
| **6** | 16 | 3.9 | -2 | -2 | 0 |
| **7** | 16 | 22.25 | 10 | 22 | 24 |
| **8** | 10.5 | 27.7 | 14 | 26 | 28 |
| **9** | 8.4 | 19.05 | 10 | 4 | 14 |
| **10** | 19 | 20 | 4 | 10 | 14 |
| **11** | 16 | 18.5 | 8 | 4 | 8 |
| **12** | 16 | 19.6 | 14 | 12 | 18 |
| **13** | 10.5 | 17 | 12 | 14 | 20 |
| **14** | 19 | 10 | 4 | 12 | 8 |
| **15** | 16 | 8.4 | 6 | 6 | 24 |
| **16** | 16 | 6 | 2 | 2 | 2 |

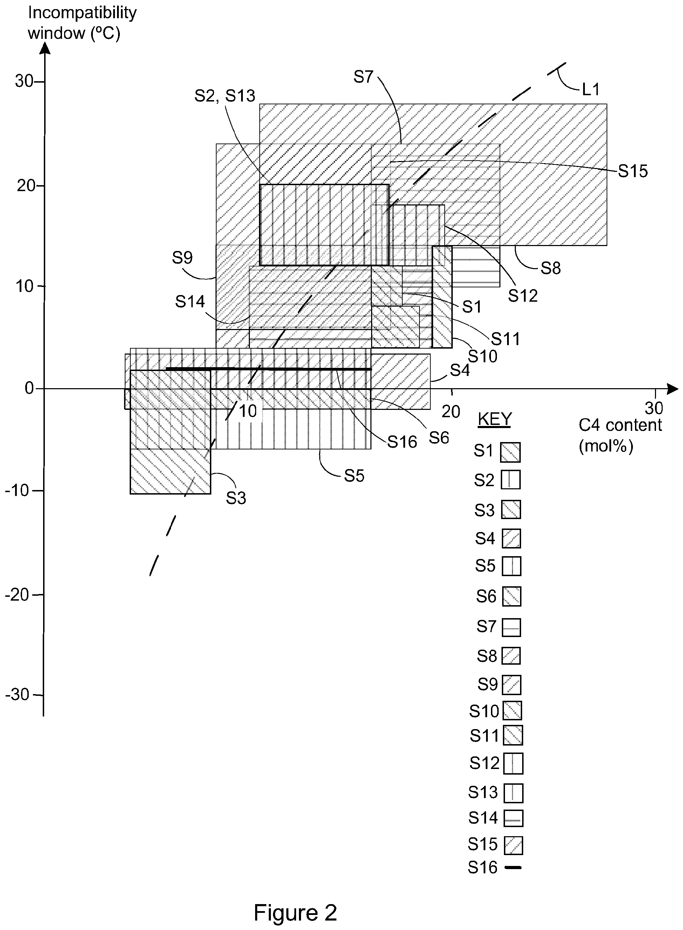

It will be seen from Table 3 that each sample generated a data set comprising a range of three sealing incompatibility window values and a lower C4 mol% value and an upper C4 mol% value. Each of these data sets can be summarised graphically as a rectangle in mol%-temperature space defined by the highest and lowest sealing incompatibility window values (in ºC) and the upper and lower mol% values. These rectangles are plotted in Figure 2. For example, sample 1, shown as rectangle S1 in Figure 2, is characterised by mol% values of 16% and 17.6% and an upper incompatibility value of 12°C and a lower incompatibility value of 8°C. Sample 17 (S17), exceptionally, appears as a horizontal line because its three sealing incompatibility temperature values are identical, namely 2°C. Samples S2 and S13 overlap almost completely.

In general, there is a positive correlation between C4 content and positive sealing incompatibility value, and this is shown by dashed line L1. Normally, a value of at least +2°C is desirable to minimise the risk of undesirable sealing of the naked collation film to a package film. It will be seen this can typically be achieved by ensuring a C4 content of 10mol% or greater. The most preferred film samples in accordance with the invention have an average C4 polyolefin content in the inner and outer sealing layers of greater than 10mol% relative to the total polyolefin content of those sealing layers.

It will be apparent that the size of the incompatibilty window is to some extent determined by the properties of the selected unit wrap. For that reason samples which only narrowly miss delivering good incompatibility windows in realtion to the exemplified unit wrap materials cannot necessarily be dismissed as being unsuitable for all unit wraps - as indeed is apparent in relation to certain samples which manifest positive incompatibilty windows for some but not all samples. Nevertheless, these investigations clearly demonstate a general trend in the compositional requirements of a suitable naked collation film, as detailed in the claims herein.

The molar ratios of the 16 samples are set out in Table 4 below.

**Table 4**

| **Sample** | **Inner Layer** | | | **Outer Layer** | | |
|---|---|---|---|---|---|---|
| | **C4/C2** | **C4/C3** | **C3/C2** | **C4/C2** | **C4/C3** | **C3/C2** |
| **1** | 4.00 | 0.20 | 20.00 | 3.14 | 0.23 | 13.71 |
| **2** | 1.62 | 0.13 | 12.77 | 24.14 | 0.21 | 117.71 |
| **3** | 0.84 | 0.10 | 8.16 | 0.37 | 0.05 | 7.33 |
| **4** | 3.17 | 0.25 | 12.50 | 0.41 | 0.04 | 9.22 |
| **5** | 2.00 | 0.21 | 9.50 | 0.81 | 0.05 | 17.42 |
| **6** | 4.00 | 0.20 | 20.00 | 0.36 | 0.05 | 7.90 |
| **7** | 4.00 | 0.20 | 20.00 | 4.24 | 0.31 | 13.81 |
| **8** | 1.62 | 0.13 | 12.77 | 6.52 | 0.40 | 16.21 |
| **9** | 0.84 | 0.10 | 8.16 | 7.78 | 0.24 | 32.04 |
| **10** | 3.17 | 0.25 | 12.50 | 2.22 | 0.28 | 7.89 |
| **11** | 2.00 | 0.21 | 9.50 | 2.42 | 0.25 | 9.65 |
| **12** | 4.00 | 0.20 | 20.00 | 3.70 | 0.26 | 14.30 |
| **13** | 1.62 | 0.13 | 12.77 | 1.99 | 0.23 | 8.71 |
| **14** | 3.17 | 0.25 | 12.50 | 0.91 | 0.13 | 7.18 |
| **15** | 2.00 | 0.21 | 9.50 | 0.71 | 0.11 | 6.76 |
| **16** | 4.00 | 0.20 | 20.00 | 1.09 | 0.07 | 16.09 |

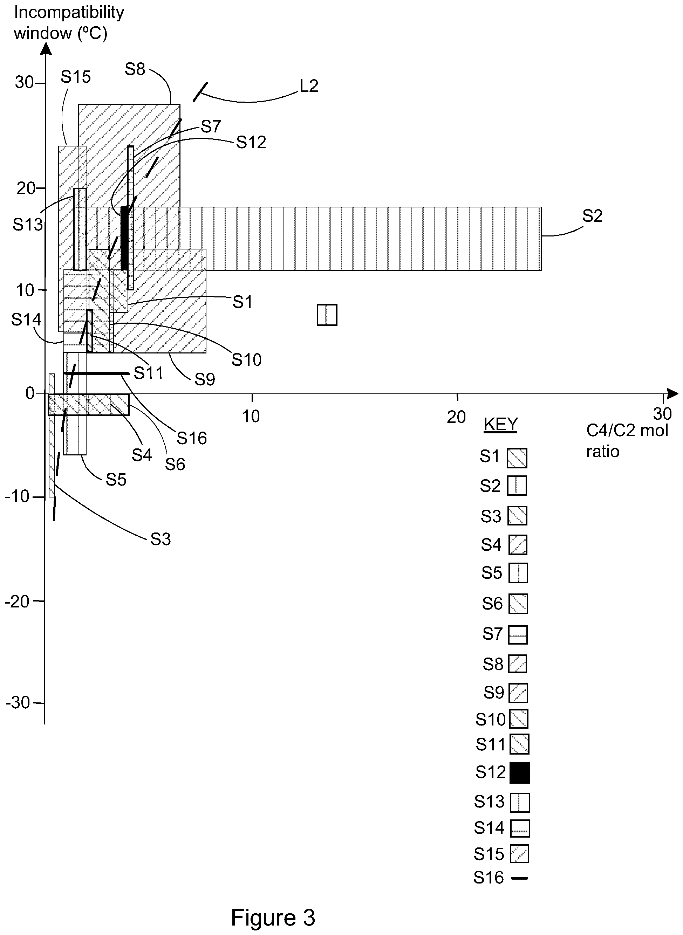

The sealing incompatibility window data sets are plotted against C4/C2 molar ratio in Figure 3 in a similar manner to the plot of Figure 2. The strong positive correlation of sealing incompatibility window value with C4/C2 molar ratio is illustrated by line L2. Typically, as shown by the intercept of C2 with the x-axis, a (desirable) positive sealing incompatibility will be obtained for a C4/C2 molar ratio of at least 1.2.

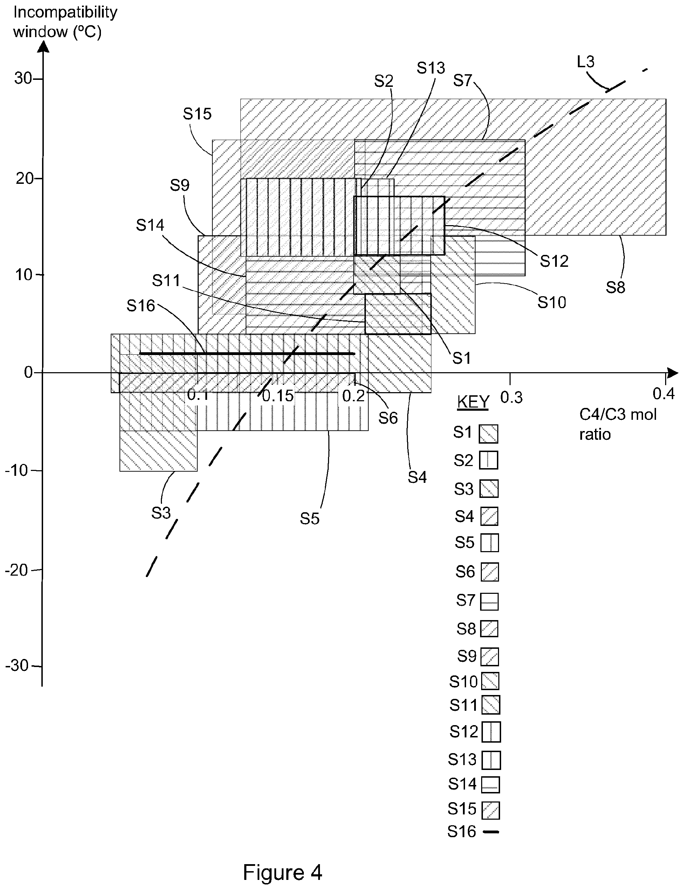

The sealing incompatibility window data sets are plotted against C4/C3 molar ratio in Figure 4 in a similar manner to the plot of Figure 2. The strong positive correlation of sealing incompatibility window value with C4/C3 molar ratio is illustrated by line L3. Typically, as shown by the intercept of C3 with the x-axis, a (desirable) positive sealing incompatibility will be obtained for a C4/C3 molar ratio of at least 0.15.

### Seal Initiation Temperature (SIT)

The Samples were subjected to tests to determine the seal strength obtained when the inner and inner, the outer and outer and the inner and outer faces of two strips were heat sealed at 5 psi for 0.5 seconds dwell time. The average seal strengths observed are provided in Table 5 below.

**Table 5**

| **Sample** | **Seal Initiation Temperature / °C** | | |
|---|---|---|---|
| | **IN/IN** | **OUT/OUT** | **IN/OUT** |
| **1** | 100 | 90 | 98 |
| **2** | 98 | 100 | 98 |
| **3** | 122 | 118 | 122 |
| **4** | 104 | 116 | 114 |
| **5** | N/A | 116 | 138 |
| **6** | 104 | 114 | 112 |
| **7** | 100 | 98 | 98 |
| **8** | 98 | 84 | 88 |
| **9** | 120 | 100 | 110 |
| **10** | 90 | 104 | 100 |
| **11** | 118 | 106 | 114 |
| **12** | 102 | 92 | 98 |
| **13** | 100 | 104 | 104 |
| **14** | 90 | 106 | 98 |
| **15** | 118 | 102 | 110 |
| **16** | 108 | 114 | 112 |

These data confirm that the seal initiation temperature exhibited by the film samples is acceptably low.

As can be seen from the results, in combination with the results disclosed in Table 7, the lower the SIT of the sample films, the larger the incompatibility window.

### Coefficient of Friction

Samples were tested on the Messmer Slip and Friction Tester apparatus in accordance with ASTM D1894 and the average coefficients of friction recorded are set out in Table 6 for both static and dynamic:

**Table 6**

| **Static** | | | | | |
|---|---|---|---|---|---|
| | **Out/Out** | **In/In** | **Out/In** | **Out/Metal** | **In/Metal** |
| **1** | 0.35 | 0.38 | 0.39 | 0.34 | 0.35 |
| **2** | 0.39 | 0.42 | 0.44 | 0.37 | 0.35 |
| **3** | 0.37 | 0.39 | 0.39 | 0.35 | 0.32 |
| **4** | 0.44 | 0.38 | 0.45 | 0.38 | 0.35 |
| **5** | 0.30 | 0.31 | 0.35 | 0.30 | 0.25 |
| **6** | 0.37 | 0.41 | 0.41 | 0.36 | 0.36 |
| **7** | 0.38 | 0.41 | 0.41 | 0.38 | 0.34 |
| **8** | 0.40 | 0.40 | 0.45 | 0.37 | 0.37 |
| **9** | 0.37 | 0.41 | 0.35 | 0.35 | 0.34 |
| **10** | 0.37 | 0.38 | 0.33 | 0.35 | 0.34 |
| **11** | 0.35 | 0.36 | 0.31 | 0.32 | 0.33 |
| **12** | 0.39 | 0.41 | 0.35 | 0.36 | 0.38 |
| **13** | 0.39 | 0.38 | 0.38 | 0.36 | 0.38 |
| **14** | 0.44 | 0.39 | 0.42 | 0.42 | 0.36 |
| **15** | 0.34 | 0.35 | 0.34 | 0.38 | 0.32 |
| **16** | 0.42 | 0.44 | 0.38 | 0.38 | 0.38 |

| **Dynamic** | | | | | |
|---|---|---|---|---|---|
| | **Out/Out** | **In/In** | **Out/In** | **Out/Metal** | **In/Metal** |
| **1** | 0.20 | 0.21 | 0.21 | 0.14 | 0.14 |
| **2** | 0.23 | 0.24 | 0.24 | 0.14 | 0.16 |
| **3** | 0.13 | 0.17 | 0.15 | 0.12 | 0.11 |
| **4** | 0.27 | 0.22 | 0.25 | 0.16 | 0.17 |
| **5** | 0.17 | 0.18 | 0.17 | 0.15 | 0.15 |
| **6** | 0.20 | 0.23 | 0.24 | 0.17 | 0.17 |
| **7** | 0.20 | 0.23 | 0.23 | 0.16 | 0.16 |
| **8** | 0.18 | 0.21 | 0.20 | 0.16 | 0.16 |
| **9** | 0.14 | 0.21 | 0.18 | 0.13 | 0.14 |
| **10** | 0.21 | 0.20 | 0.20 | 0.16 | 0.16 |
| **11** | 0.24 | 0.23 | 0.22 | 0.15 | 0.16 |
| **12** | 0.22 | 0.26 | 0.23 | 0.15 | 0.17 |
| **13** | 0.21 | 0.23 | 0.21 | 0.16 | 0.18 |
| **14** | 0.28 | 0.22 | 0.28 | 0.18 | 0.17 |
| **15** | 0.20 | 0.20 | 0.25 | 0.16 | 0.16 |
| **16** | 0.26 | 0.26 | 0.24 | 0.18 | 0.19 |

It is known that coefficients of friction are highly dependent on the surface characteristics of the film as well as the sealing properties of the polymer.

As will be recognised by those skilled in the art, the coefficients of friction remain relatively low, and thus the films according to the present invention exhibit good hot slip properties.

### Incompatibility

To investigate the degree of incompatibility between the naked collation film wrap samples and the film used on the unit wraps, heat seal thresholds were carried using three-layer hybrid test (as outlined above).

The inner seal of the naked collation film sample is tested against the outer of the unit wrap, with bottom jaw off. The unit wrap films selected for this test were GLS20, GLT20, and ZXA20, all polyolefinic unit wrap films. GLS20 and GLT20 are commercially available from Innovia Films Ltd, Wigton, Cumbria; ZXA20 is commercially available from Innovia Films Mexico SA de CV, Zacapu, Mexico.

The samples were tested to determine the temperature at which seals were formed. The test was performed using heat seal apparatus operated at a pressure of 5 psi with a dwell time of 0.5 seconds.

By determining the temperature at which a seal is formed between the naked collation film and polyolefinic filmic wrap, it is possible to determine the incompatibility window, in which heat sealing can be performed with minimal risk of seals being formed between the naked collation film and the filmic wraps.

**Table 7**

| **Sample** | **Incompatibility Window / °C** | | |
|---|---|---|---|
| | **GLT20** | **GLS20** | **ZXA20** |
| **1** | 8 | 10 | 12 |
| **2** | 12 | 20 | 18 |
| **3** | -2 | -10 | 2 |
| **4** | -2 | 2 | 4 |
| **5** | 4 | -6 | 0 |
| **6** | -2 | -2 | 0 |
| **7** | 10 | 22 | 24 |
| **8** | 14 | 26 | 28 |
| **9** | 10 | 4 | 14 |
| **10** | 4 | 10 | 14 |
| **11** | 8 | 4 | 8 |
| **12** | 14 | 12 | 18 |
| **13** | 12 | 14 | 20 |
| **14** | 4 | 12 | 8 |
| **15** | 6 | 6 | 24 |
| **16** | 2 | 2 | 2 |

It is important that the incompatibility window has a positive value. It will be appreciated that the larger the positive incompatibility window, the more advantageous this is operationally. The incompatibility range or "incompatibility window" needs to be sufficiently broad to enable sealings to be performed without fluctuations in heat seal temperature resulting in the naked collation film being sealed to the filmic wraps of the individual packages in the bundles.

Further, as can be seen from the results, the naked collation films according to the present invention advantageously perform to substantially the same performance independent of the composition of the unit wrap. Therefore, different unit wrap materials can be employed in accordance with a naked collation film according to the present invention without sacrificing the naked collation film's performance.

### Optical properties

The optical properties of the outer and inner layer of the films were determined. Specifically, gloss values of the samples were recorded using the ASTM D2457 test method. Gloss was measured using a Rhopoint glossmeter, using an angle of 45°. The results are provided below:

**Table 8**

| **Sample** | **Gloss 45°** | |
|---|---|---|
| | **Outer Layer** | **Inner Layer** |
| **1** | 76.6 | 86.1 |
| **2** | 84.3 | 89.3 |
| **3** | 77.0 | 88.2 |
| **4** | 83.9 | 87.3 |
| **5** | 87.6 | 94.0 |
| **6** | 90.7 | 89.7 |
| **7** | 87.3 | 86.6 |
| **8** | 91.1 | 92.3 |
| **9** | 87.3 | 90.1 |
| **10** | 92.6 | 83.8 |
| **11** | 89.7 | 88.2 |
| **12** | 92.1 | 92.1 |
| **13** | 93.6 | 92.8 |
| **14** | 86.3 | 85.1 |
| **15** | 89.2 | 83.9 |
| **16** | 90.7 | 89.0 |

As will be apparent to the skilled person, the optical properties render the films suitable for use as naked collation films.

### Comparative Example

A comparative example of a blocking biaxially oriented film was prepared using the same method as described above under "preparation of films".

C1 is a Comparative Example in accordance with Example 1 of EP3034300A1, which is a blocking film. The sealing layers of C1 comprise a single C4-C3 polyolefin copolymer with a standard antiblock/slip package in the outer layer of 6% sliding masterbatch ABVT3 NSC^{®} (commercialized by Schulman) and 1% antiblock masterbatch based on SiO₂ particles having a 2µm diameter (commercialized by Constab) and a standard antiblock/slip package in the inner layer 6% antiblock masterbatch ABVT30N^{®} (commercialized by Schulman), 1% antiblock masterbatch based on silica particles having a 2µm diameter (commercialized by Constab).

Details are given in Table 9 below.

The incompatibility window of C1 was determined in accordance with the same procedure detailed above in relation to the films of the invention.

**Table 9**

| **Sample** | **Content** | | | **Sample** | | **Content (IN)** | | | **Content (OUT)** | | | **Seal Initiation Temperature/ °C (SIT)** | **Incompatibility Window / °C** | | |
|---|---|---|---|---|---|---|---|---|---|---|---|---|---|---|---|
| | **C2** | **C3** | **C4** | **IN** | **OUT** | **C2** | **C3** | **C4** | **C2** | **C3** | **C4** | **(IN/OUT)** | **GLT20** | **GLS20** | **ZXA20** |
| C1 | - | 74 | 26 | 100% | 100% | 0 | 74 | 26 | 0 | 74 | 26 | 106 | 26 | 38 | 34 |

### Pack-to-Pack Blocking Test

Sheets of film were cut out using a cutting template (a rigid plate measuring 93 × 68mm) and wrapped around wooden blocks (teak or similar hardwood), with the test side facing outwards, and positioned such that the test surfaces of the two wrapped blocks are in contact with one another. The wooden blocks were 72 × 42 × 10mm weighing approx. 30g with a self-adhesive felt covering on the test side.

The two wrapped blocks were placed squarely on a metal plate, with the test sides of the film in contact with one another, and a 200g (± 2g) weight was placed on top of the blocks. The samples were placed in a thermostatically controlled oven for 72 hours at 60°C, after which the samples were removed from the oven and cooled for at least 30 minutes prior to further measurement as described below.

After cooling, the top block was held and the weight removed. The sample was placed in the cradle of an electric horizontal test stand with a Sauter^{™} gauge (model FK50) attached. The gauge speed was set to 800 mm/min. The test apparatus pushes the top block along the surface of the lower block held in place in the cradle of the apparatus, and the peak reading is recorded as the force required (in N) to initiate relative lateral movement between the blocks, requiring lateral separation (unblocking) of the sheets.

In Table 10 below the pack-to-pack blocking test is a "PASS" if the force required to intitiate relative lateral movement of the blocks is below 5N. The test is a "FAIL" if the force required is above 5N.

**Table 10**

| **Sample** | **PASS/FAIL** |
|---|---|
| **C1** | FAIL |
| **1-16** | PASS |

For experimental certainty C1 and Samples 11 and 15 according to the invention were repeat-tested five times, with the results shown in Table 11.

**Table 11**

| **Sample** | **60°C/72 hours** | | | | | **Av (N)** |
|---|---|---|---|---|---|---|
| **11** | 2.38 | 2.46 | 1.72 | 3.26 | 2.16 | **2.40** |
| **15** | 2.02 | 5.42 | 3.48 | 3.8 | 3.31 | **3.61** |
| **C1** | * | 46.12 | * | * | * | **46.1** |

| | | | | | | |
|---|---|---|---|---|---|---|
| **too high to measure* - *i.e exceeding 50N which is the maximum force the Sauter gauge can measure.* | | | | | | |

To ensure efficacy of the blocking test under a range of conditions the above procedure was repeated with C1 and Samples 11 and 15 in accordance with the invention with the difference that the samples were placed in the oven for 3 rather than 72 hours, and at a temperature of 75°C rather than 60°C, with the results shown in Table 12.

**Table 12**

| **Sample** | **75°C/3 hours** | | | | | **Av (N)** |
|---|---|---|---|---|---|---|
| **11** | 2.54 | 2.3 | 2.18 | 2.48 | 2.38 | **2.38** |
| **15** | 3.86 | 3.24 | 2.22 | 2.3 | 2.44 | **2.81** |
| **C1** | 9.18 | 10.2 | 12.44 | 7.56 | 11.26 | **10.13** |

As will be apparent, even when the naked collation films employed in the process of the present invention are pressed together at elevated pressures and temperatures over an extended period of time, no blocking of any significant degree is formed between them in comparison to films not according to the present invention. This means that wrapped bundles formed from films in accordance with the invention can be packed and shipped while still warm or hot (or be exposed to somewhat harsh conditions in transit or storage) following the wrapping procedure without risk that the wrapped packages will adhere to each other and cause blocking.

On the other hand, although comparative example C1 demonstrates a wide incompatibility window, it is unsuitable for use in naked collation packaging on account of its blocking tendency.

In order for a film to be "non-blocking" in accordance with the invention, it is necessary for the film consistently, or at least on an average of 5 repeat tests, to pass the blocking test under conditions of 60° for 72 hrs, and preferred that it also consistently, or at least on an average of 5 repeat tests, passes the blocking test at 75°C for 3 hrs.

## Claims

1. A naked collation film comprising a polyolefinic inner sealing layer on one surface of the film and a polyolefinic outer sealing layer on the opposite surface of the film, the outer sealing layer being sealable to itself and to the inner sealing layer and both the inner and outer sealing layers comprising C4, and at least one of C2 and C3 polyolefins, wherein at least one of the sealing layers has a C4 polyolefin content of greater than 10mol% relative to the total polyolefin content of that sealing layer and wherein one or both of the inner and outer sealing layers comprises at least one C2/C3/C4 terpolymer.

2. A naked collation film according to claim 1 wherein:
i. at least one of the sealing layers has a C4 polyolefin content of greater than 10.5 mol%; and/or
ii. the polyolefinic outer sealing layer has a C4 polyolefin content of greater than 10mol%; and/or
iii. each of the inner and outer sealing layers has a C4 polyolefin content of greater than 10mol%; and/or
iv. the average C4 polyolefin content in the inner and outer sealing layers is greater than 10mol%, greater than 10.5 mol%, greater than 11.0mol%, greater than 11.5mol%, or greater than 12.0mol% relative to the total polyolefin content of those sealing layers.

3. A naked collation film comprising a polyolefinic inner sealing layer on one surface of the film and a polyolefinic outer sealing layer on the opposite surface of the film, the outer sealing layer being sealable to itself and the to the inner sealing layer and both the inner and outer sealing layers comprising C2 and C4 polyolefins, and optionally also C3 polyolefin, wherein at least one of the sealing layers has a C4:C2 molar ratio of at least 1.2 and wherein one or both of the inner and outer sealing layers comprises at least one C2/C3/C4 terpolymer.

4. A naked collation film according to claim according to claim 7 or claim 8, wherein:
i. at least one of the sealing layers has a C4:C2 molar ratio of at least 1.5; and/or
ii. the polyolefinic outer sealing layer has a C4:C2 molar ratio of at least 1.2; and/or
iii. each of the inner and outer sealing layers has a C4:C2 molar ratio of at least 1.2; and/or
iv. the average C4:C2 molar ratio of the inner and outer sealing layers is at least 1.2.

5. A naked collation film comprising a polyolefinic inner sealing layer on one surface of the film and a polyolefinic outer sealing layer on the opposite surface of the film, the outer sealing layer being sealable to itself and the to the inner sealing layer and both the inner and outer sealing layers comprising C3 and C4 polyolefins, and optionally also C2 polyolefin, wherein at least one of the sealing layers has a C4:C3 molar ratio of at least 0.15 and wherein one or both of the inner and outer sealing layers comprises at least one C2/C3/C4 terpolymer.

6. A naked collation film according to claim 11 or claim 12 wherein:
i. at least one of the sealing layers has a C4:C3 molar ratio of at least 0.16; and/or
ii. the polyolefinic outer sealing layer has a C4:C3 molar ratio of at least 0.15; and/or
iii. each of the inner and outer sealing layers has a C4:C3 molar ratio of at least 0.15; and/or
iv. the average C4:C3 molar ratio in the inner and outer sealing layers is at least 0.15.

7. A naked collation film according to any preceding claim wherein both of the inner and outer sealing layers comprise C2, C3 and C4 polyolefins.

8. The naked collation film according to any preceding claim wherein one or both of the inner and outer sealing layers comprise a blend of C2/C3, C2/C4 and/or C3/C4 copolymers.

9. A naked collation film according to any preceding claim, further comprising a polyolefinic core layer on which said inner and outer sealing layers are formed.

10. A non-blocking naked collation film according to any preceding claim.

11. The naked collation film according to any preceding claim wherein at least the outer sealing layer comprises at least one copolymer or terpolymer having a melting point above 75°C, optionally above 80°C.

12. A naked collation film according to any preceding claim wherein one or both of the sealing layers comprises a blend of two or more copolymers of ethylene and propylene, ethylene and butylene, propylene and butylene and/or a terpolymer of ethylene, propylene and butylene.

13. A naked collation package comprising a plurality of individually film-wrapped packages packaged within a sealed naked collation film as claimed in any preceding claim.

14. A naked collation package according to claim 13 wherein each individually film-wrapped package comprises a further polyolefin film in contact with said inner sealing layer.

15. A method for forming a naked collation package comprising:
a) providing an arrangement of individually film-wrapped packages;
b) providing a naked collation film as claimed in any of claims 1 to 12;
c) arranging the individually wrapped packages in an ordered configuration;
d) arranging the naked collation film such that it at least partially surrounds the ordered configuration of individually film-wrapped packages; and
e) sealing the naked collation film to itself without sealing the naked collation film to the film-wrapped packages.
